# EUROPÄISCHE PATENTANMELDUNG

(11) **EP 4 674 250 A1**
(43) Veröffentlichungstag der Anmeldung: **07.01.2026**
(21) Anmeldenummer: 25183555.9
(22) Anmeldetag: 18.06.2025
(51) Int. Cl.: A01D 41/127, A01D 43/08

(54) **VERFAHREN ZUM ERNTEN VON PFLANZENMATERIAL**

(30) Priorität: 03.07.2024 DE 102024118934
(71) Anmelder: CLAAS Saulgau GmbH, 88340 Bad Saulgau (DE)
(72) Erfinder: Fischer, Josef, 88400 Biberach (DE); Becker, Michael, 88367 Hohentengen (DE); Neitemeier, Dennis, 59510 Lippetal (DE)
(74) Vertreter: CLAAS Gruppe

(57) **Zusammenfassung**

Ein Verfahren zum Ernten von Pflanzenmaterial, insbesondere von Tierfutter, von einer landwirtschaftlichen Nutzfläche, umfasst wenigstens einen Bearbeitungsschritt (II, VI, X), der das Aufnehmen von Pflanzenmaterial an einem ersten Ort der Nutzfläche und Ablegen des Pflanzenmaterials an einem zweiten, anderen Ort der Nutzfläche umfasst, wobei in dem Schritt ein Datensatz der Nutzfläche erstellt wird, der einen zweiten Ort der Nutzfläche mit wenigstens einem ersten Ort (5) verknüpft, an dem am zweiten Ort abgelegtes Pflanzenmaterial aufgenommen wurde.

## Beschreibung

Die vorliegende Erfindung betrifft ein Verfahren zum Ernten von Pflanzenmaterial, insbesondere von Grüngut zur Verwendung als Tierfutter, von einer landwirtschaftlichen Nutzfläche.

Eine solches Verfahren ist in der nicht vorveröffentlichten DE10 2023 119 546.8 beschrieben. Anders als die Ernte etwa von Körnerfrüchten, bei der das reife Pflanzenmaterial typischerweise von ein und derselben Erntemaschine in einem durchgehenden Prozess geschnitten und gedroschen wird, und der Kornanteil umgehend geborgen wird, umfasst dieses Verfahren zahlreiche Schritte wie Schneiden, Wenden und Schwaden, die sich über einen Zeitraum von mehreren Tagen verteilen und jeweils das Aufnehmen und Wiederauslegen des Pflanzenmaterials auf der Nutzfläche umfassen, mit der Folge, dass der Ort, an dem eine gegebene Portion des Pflanzenmaterials am Ende des Prozesses geborgen wird, eine beträchtliche Entfernung zu dem Ort aufweisen kann, an dem dasselbe Material zuvor gewachsen ist. Wenn an einer solchen Portion Pflanzenmaterial ein Mangel oder eine Abweichung von einem gewünschten Wert einer Eigenschaft beobachtet wird, ist es daher schwierig, zu beurteilen, an welchem Ort der Nutzfläche Maßnahmen getroffen werden sollten, die den Mangel in Zukunft beheben können. Werden solche Maßnahmen an einem Ort getroffen, der für den beobachteten Mangel nicht ursächlich ist, dann bleibt der beobachtete Mangel unkorrigiert, und es besteht die Gefahr, dass an anderem Ort neue hinzukommen.

Aufgabe der Erfindung ist daher, ein Ernteverfahren anzugeben, das die gezielte Beseitigung von im Erntegut beobachteten Mängeln erleichtert.

Die Aufgabe wird gelöst durch ein Verfahren zum Ernten von Pflanzenmaterial, insbesondere von Tierfutter, von einer landwirtschaftlichen Nutzfläche, mit wenigstens einem Bearbeitungsschritt, der das Aufnehmen von Pflanzenmaterial an einem ersten Ort der Nutzfläche und Ablegen des Pflanzenmaterials an einem zweiten, anderen Ort der Nutzfläche umfasst, wobei in dem Schritt ein Datensatz der Nutzfläche erstellt wird, der einen zweiten Ort der Nutzfläche mit wenigstens einem ersten Ort verknüpft, an dem am zweiten Ort abgelegtes Pflanzenmaterial aufgenommen wurde.

Wenn somit am zweiten Ort ein Mangel im dort abgelegten Material erfasst wird, kann anhand des Datensatzes der erste Ort, von dem das mangelhafte Material herrührt, schnell und eindeutig ermittelt werden, und indem eine Maßnahme zur Beseitigung des Mangels genau an diesem ersten Ort getroffen wird, kann einem erneuten Auftreten des Mangels am zweiten Ort entgegengewirkt werden.

Die Verknüpfung kann darin bestehen, dass in einer Karte der Nutzfläche nach dem Bearbeitungsschritt zu einem zweiten Ort der Nutzfläche wenigstens einen ersten Ort spezifiziert wird, an dem am zweiten Ort abgelegtes Pflanzenmaterial aufgenommen wurde. Da allerdings im Laufe eines Bearbeitungsschritts Material von vielen, weit voneinander entfernten Bereichen der Nutzfläche in einem kleinen Teil derselben konzentriert werden kann, kann eine hohe und eventuell zu Beginn einer Bearbeitung noch gar nicht bekannte Auflösung erforderlich sein, um in einer solchen Karte die Herkunft des Materials aufzeichnen zu können. Es wird daher erwartet, dass es einfacher sein wird, eine Karte der Nutzfläche vor dem Bearbeitungsschritt zu erstellen, in der jeweils zu einem ersten Ort der Nutzfläche spezifiziert ist, an welchem zweiten Ort der Nutzfläche das an diesem ersten Ort aufgenommene Material wieder abgelegt wurde.

Der Bearbeitungsschritt kann ein einzelner unter Mähen, Wenden oder Schwaden ausgewählter Schritt oder eine Abfolge von zwei oder mehr dieser Schritte sein. Wenn der Bearbeitungsschritt ein Einzelschritt ist, werden im Laufe mehrerer Bearbeitungsschritte mehrere Datensätze erzeugt, von denen jeder einzelne die im Laufe des betreffenden Bearbeitungsschritts vorgenommenen Verlagerungen des Materials beschreibt. Im Falle der Beobachtung eines Mangels können diese Schritt für Schritt rückverfolgt werden, um herauszufinden, wo sich eine Portion des Pflanzenmaterials, in der ein Mangel festgestellt wurde, in den verschiedenen vorhergehenden Schritten des Verfahrens aufgehalten hat. Dies erleichtert insbesondere die Erkennung von sich ausbreitenden Mängeln wie etwa Fäulnis, den eine Portion des Pflanzenmaterials sich zwischen zwei beliebigen Schritten des Ernteverfahrens von einer benachbarten Portion zugezogen haben kann, und der nicht zwangsläufig mit dem Ort zusammenhängt, an dem die betreffende Portion ursprünglich gewachsen ist. Wenn der Bearbeitungsschritt mehrere Einzelschritte zusammenfasst, dann wird für die Gesamtheit der zusammengefassten Einzelschritte nur ein Datensatz erzeugt. So können zwar nicht mehr alle Orte ermittelt werden, an denen eine mangelhafte Portion zwischen zwei Schritten des Ernteverfahrens gelegen hat, aber die Ermittlung ihres Ausgangsorts ist in kürzerer Zeit möglich.

Auch wenn die Bewegung einzelner Partikel des Pflanzenmaterials während eines Bearbeitungsschritts weder genau berechnet nur per Bildverarbeitung verfolgt werden kann, kann für eine Portion von Pflanzenmaterial, die eine große Zahl von Partikeln umfasst, der zweite Ort, an dem sie nach dem Bearbeitungsschritt zu liegen kommt, anhand des ersten Orts, und der Art des Bearbeitungsschritts und optional der Fahrtgeschwindigkeit einer den Bearbeitungsschritt durchführenden Maschine und/oder der Geschwindigkeit von in dem Bearbeitungsschritt eingesetzten Werkzeugen der Maschine recht genau vorhergesagt werden. So können etwa der Versatz quer zur Fahrtrichtung und in Fahrtrichtung, die eine Portion des Pflanzenmaterials beim Schneiden erfährt, im Wesentlichen durch die Bauart des Schneidwerkzeugs vorgegebene Konstanten sein, während beim Schwaden mit einem Kreiselschwader der Weg, den eine Portion entlang des Umfangs von dessen Kreisel zurücklegt bzw. nach Lösen vom Umfang des Kreisels geradlinig weiterfliegt, davon abhängen kann, an welcher Stelle des Umfangs des Kreisels die Portion auf diesen trifft, und wie schnell er rotiert.

Wenn das am zweiten Ort abgelegte Pflanzenmaterial wieder aufgenommen wird, kann dies im Rahmen eines weiteren Bearbeitungsschritts (an dessen Ende es wiederum auf der Nutzfläche ausgelegt wird) oder im Rahmen einer Bergung erfolgen, bei der es aufgesammelt und dem Einfluss der Witterung entzogen wird. Bei diesem Aufnehmen kann wenigstens ein Parameter des am zweiten Ort aufgenommenen Pflanzenmaterials gemessen und in Zuordnung zum ersten Ort in den Datensatz aufgenommen werden.

Als zu messende Parameter kommen insbesondere der Wasser- oder Trockenmasseanteil des Pflanzenmaterials, seine Masse pro Flächeneinheit, der Gehalt des Pflanzenmaterials an einem wertbestimmenden Bestandteil wie etwa Kohlenhydrat, speziell Zucker, Protein, oder ein Verunreinigungsanteil in Betracht.

Indem ein Verunreinigungsanteil über die diversen Schritte des Erntevorgangs bis zum anfänglichen Schneiden rückverfolgt wird, kann ermittelt werden, wo ggf. Maßnahmen zur Pflege der Bodenoberfläche erforderlich sind, um Erosion und zukünftige Verschmutzung zu minimieren; anhand der wertbestimmenden Bestandteile oder der Masse pro Flächeneinheit kann über gezielte lokale Düngungsmaßnahmen entschieden werden. Messwerte über den Feuchte- oder Trockenmasseanteil erlauben zum einen, nasse Stellen der Nutzfläche zu identifizieren, die Gegenstand von Bodenpflegemaßnahmen werden können; anhand dieser Werte - insbesondere wenn sie während anlässlich verschiedener Bearbeitungsschritte des Erntevorgangs aktualisiert werden, kann auch der Fortschritt eines Trocknungsvorgangs überwacht und ein geeigneter Zeitpunkt für die Bergung prognostiziert werden. Denkbar ist auch, anhand von Werten des Feuchte- oder Trockenmasseanteils eine Route für einen Bearbeitungsschritt so festzulegen, dass feuchtes Material in verschiedene Richtungen verteilt und dadurch seine Abtrocknung begünstigt wird.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: einen Traktor mit Mähwerk beim Mähen einer Wiese; und
- Fig. 2: den zeitlichen Ablauf von Schritten des Verfahrens auf einem Streifen der Wiese.

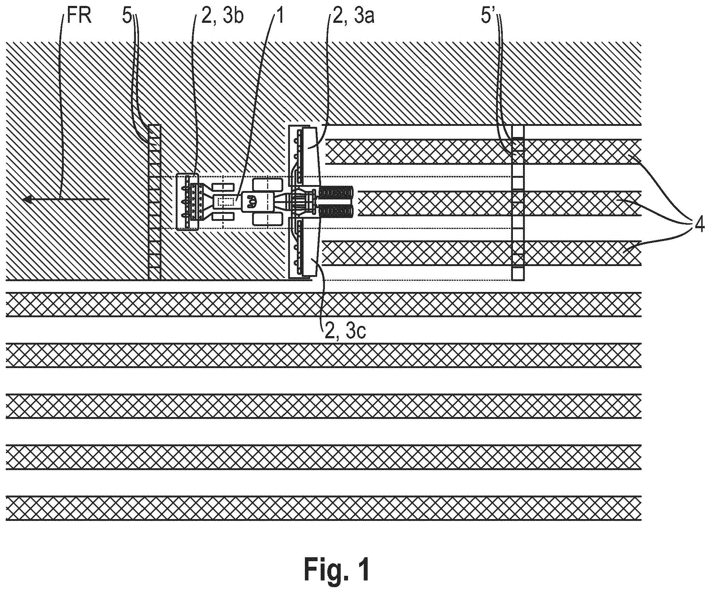

Fig. 1 zeigt in einer Draufsicht einen Traktor 1 mit einem Mähvorsatz 2 beim Mähen einer Wiese. Der Mähvorsatz 2 umfasst hier mehrere quer zur Fahrtrichtung FR gestaffelte Teile 3a-c, die das Mähgut schneiden und vollflächig oder, wie hier dargestellt, jeweils in Form eines in der Fahrtrichtung langgestreckten Schwads 4, auf der gemähten Fläche ablegen.

In einer Datenbank ist eine Karte der Wiese hinterlegt, in der die Wiese in ein zweidimensionales Raster von Flächenelementen 5 unterteilt ist. Eine quer zur Fahrtrichtung FR orientierte Reihe von Flächenelementen ist in Fig. 1 eingezeichnet. Vor dem Mähen der Wiese sind jedem dieser Flächenelemente 5 seine eigenen geographischen Koordinaten zugeordnet, um anzuzeigen, dass das Pflanzenmaterial, das auf dem betreffenden Flächenelement 5 gewachsen ist, sich auch dort befindet.

Die Breite der Flächenelemente 5 kann am Aufbau des Mähvorsatzes 2 orientiert sein. Wenn der Mähvorsatz 2 beispielsweise rotierende Messer verwendet, ist nicht zu vermeiden, dass Pflanzenmaterial beim Schneiden seitwärts verlagert wird; wenn die Breite eines Flächenelements 5 dem Durchmesser eines Messerrotors entspricht, kann davon ausgegangen werden, dass das Pflanzenmaterial beim Schneiden im Wesentlichen in dem Flächenelement bleibt, in dem es gewachsen ist, und dass folglich die Karte bei einem Mähen mit vollflächiger Ablage unverändert bleiben kann (sofern nicht eine Verlagerung des Materials in der Fahrtrichtung berücksichtigt werden muss).

Wenn jedoch wie in Fig. 1 dargestellt jeder Teil 3a-c des Mähvorsatzes 2 das Material nach dem Schneiden als Schwad 4 ablegt, so beinhaltet dies eine Verlagerung von Material, die sich in der Karte widerspiegelt, denn Flächenelemente 5', auf denen der Schwad 4 zu liegen kommt, enthalten nun nicht nur das auf ihnen selbst gewachsene Material, sondern auch welches von einem oder mehreren benachbarten Flächenelementen.

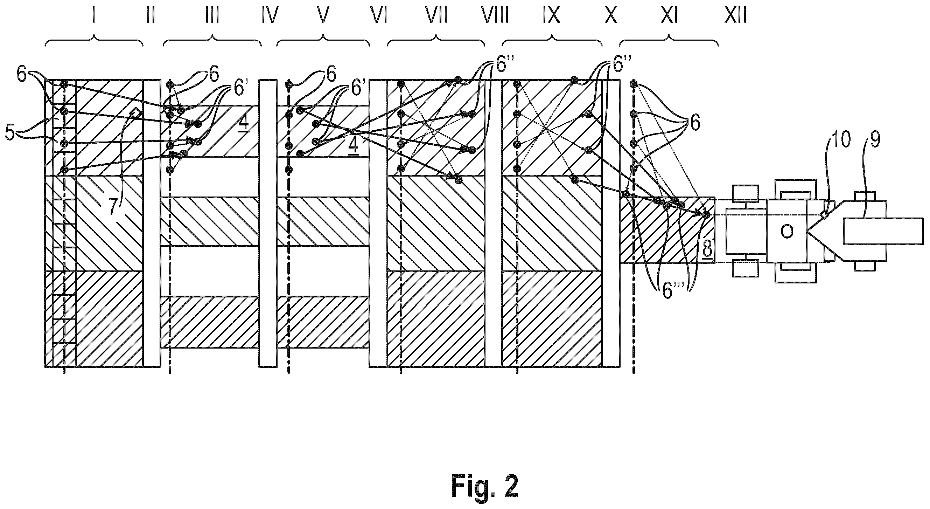

Fig. 2 veranschaulicht diesen Sachverhalt anhand eines sich quer zur Fahrtrichtung erstreckenden Streifens von Flächenelementen. Vor dem Mähen, dargestellt in Spalte I der Figur, befindet sich sämtliches Pflanzenmaterial an seinem Ursprungsort, symbolisiert durch eine Reihe von Symbolen 6 in Form eines Kreises mit einem Kreuz darin, die sich jeweils innerhalb ihres zugeordneten Flächenelements 5 befinden.

Beim Mähen und Schwaden im Mähvorsatz 2 (Spalte II) wird in jedem Teil 3a-c des Mähvorsatzes 2 Material von dessen Rändern zur Mitte verlagert, um die Schwade 4 zu bilden. Die Verweilzeit des Materials im Mähvorsatz 2 - und damit die Strecke, über die es in Fahrtrichtung mitgenommen wird - ist umso länger, je weiter das Material im Vorsatz 2 seitwärts verlagert wird. Material, das von den eine geraden Linie quer zur Fahrtrichtung FR bildenden Flächenelementen 5 herrührt, wird daher im Schwad 4 in einer V-Form wieder ausgelegt, wie in Spalte III der Fig. 2 durch eine Anordnung von Symbolen 6' dargestellt. Dem entspricht eine Aktualisierung der Karte, bei der jedem Flächenelement 5 diejenigen geographischen Koordinaten zugeordnet werden, an denen sich das auf ihm gewachsene Pflanzenmaterial nun befindet.

Um die Verlagerung des Materials anschaulich zu machen, sind in Spalte III nicht nur die Symbole 6' für die neuen Positionen des Materials auf einem Stück der Wiese dargestellt, sondern auch die der Ausgangspositionen, wobei Symbole, die dieselbe Materialportion repräsentieren, jeweils durch einen gestrichelten Pfeil verbunden sind.

Am Mähvorsatz 2 oder am Traktor 1 kann ein Sensor 7 zum Erfassen eines interessierenden Parameters des Pflanzenmaterials vorgesehen sein; z.B. ein Feuchtesensor, der den Wassergehalt von an ihm vorbeigeführtem Pflanzenmaterial abschätzt. Denkbar ist auch ein Radarsensor oder eine Kamera, die auf den Pflanzenbestand vor dem Mähvorsatz ausgerichtet ist, um dessen Flächenertrag abzuschätzen, ein Kraft- oder Drehmomentsensor, der im Betrieb einer für den Massenstrom des Pflanzenmaterials repräsentativen Last ausgesetzt ist, oder dergleichen. Der Sensor 7 kann, wie in Fig. 2 Spalte I angedeutet, einem einzigen der von dem Vorsatz 2 oder einem seiner Teile 3 erfassten Flächenelemente 5 zugeordnet sein; wobei dann in der späteren Verarbeitung davon ausgegangen wird, dass ein von dem Sensor 7 für das zugeordnete Flächenelement 5 gemessener Wert des Parameters auch für die anderen Flächenelemente 5 der Reihe zutrifft; natürlich kann auch jedem Flächenelement 5 der Reihe ein eigener Sensor 7 zugeordnet sein (oder der Radarsensor bzw. die Kamera kann angeordnet sein, um Daten aller Flächenelemente 5 der Reihe zu erfassen).

Wenn der erfasste Parameter der Wassergehalt ist, dann kann ein für nur ein Flächenelement 5 gemessener und auch für die anderen Flächenelemente der Reihe als repräsentativ angesehener Messwert ausreichen, um abzuschätzen, wie lang etwa ein Trocknungsschritt IV voraussichtlich dauern muss, um einen vorgegebenen Ziel-Trocknungsgrad zu erreichen.

Den Wassergehalt für jedes einzelne Flächenelement 5 der Reihe zu messen und in der Karte aufzuzeichnen, kann nützlich sein, um einen Zusammenhang mit anderen, erst später gemessenen Eigenschaften des Pflanzenmaterials zu erkennen und ggf. über Optimierungsmaßnahmen entscheiden zu können.

Während des Trocknungsschritts IV wird das Pflanzenmaterial nicht verlagert; dementsprechend gleicht die Anordnung der Symbole 6' in Spalte V, nach dem Trocknen, derjenigen der Spalte III.

Für eine gleichmäßige Trocknung des Pflanzenmaterials kann ein Wenden (Spalte VI) erforderlich sein. Die Art und Weise, in der beim Wenden das

Pflanzenmaterial auf der Fläche verlagert wird, hängt offensichtlich von der Bauart der dafür verwendeten Maschine ab. Wenn man annimmt, dass ein Wender mit einem um eine vertikale Achse rotierenden Rotor zum Einsatz kommt, und diese Achse entlang der Mitte des Schwads 4 bewegt wird, dann kommt die Mitte des Schwads 4 früher in Eingriff mit dem Kreisel als seine Randbereiche, und folgt dem Rotor auf einem größeren Teil seines Umfangs als etwa ein bezogen auf die Drehrichtung des Rotors stromabwärtiger Randbereich des Schwads, und wird somit stärker beschleunigt und weiter geworfen als jener. Ungenauigkeiten bei der Platzierung des Rotors relativ zum Schwad haben daher einen erheblichen Einfluss auf die Materialbewegung beim Wenden. Wieweit und in welche Richtung Material verlagert wird, das sich an einem stromaufwärtigen Rand des Schwads befindet, hängt davon ab, ob weiter stromabwärts liegendes Material seiner

Bewegung im Wege ist, unter anderem also von der Dicke des Schwads.

Auch die Fahrtgeschwindigkeit des Traktors 1 und die Drehzahl des Rotors spielen eine Rolle; auch äußere Umstände wie Wind, Bodenneigung, etc. Es kann sich daher ein komplexes Muster der Materialverlagerung ergeben, bei dem die Wege von Materialportionen aus verschiedenen Flächenelementen 5 einander kreuzen, wie in Spalte VII gezeigt.

Welche Messwerte benötigt werden, um die Bewegung des Materials beim Wenden abschätzen zu können, kann sich aus den oben geschilderten Gründen im Laufe eines Einsatzes laufend ändern. Um sicherzustellen, dass die zum Abschätzen der Materialbewegung benötigten Daten immer aktuell und rechtzeitig beschafft werden können, kann es daher sinnvoll sein, die Aktualisierung der Karte auf einem Computer an Bord des Traktors 1 durchzuführen.

Auch beim Wenden kann die Restfeuchtigkeit des Pflanzenmaterials gemessen und daraus eine voraussichtliche Resttrocknungsdauer prognostiziert werden. Falls sich Voraussetzungen der Prognose nicht bewahrheiten, insbesondere wenn das Wetter kühler und/oder feuchter wird als zum Zeitpunkt der Prognose erwartet, kann ein weiterer Schritt des Wendens und/oder Schwadens erforderlich werden, bei denen jeweils wiederum, wie oben beschrieben, nachverfolgt und in der Karte verzeichnet wird, wohin das Pflanzenmaterial jedes einzelnen Flächenelements verlagert worden ist. Fig. 2 zeigt den Fall, dass die Trocknungsphase VIII nach dem Wenden wie erwartet abläuft. In diesem Fall folgt auf die Trocknungsphase VIII ein Schwaden X, bei dem das über eine gesamte Arbeitsbreite des Mähvorsatzes 2 hinweg zu einem einzigen Schwad 8 zusammengeführt wird. Eine neue Materialverteilung ist die Folge, bei denen die Karteneinträge aller Flächenelemente 5 auf nah beieinanderliegende Orte im Schwad 8, bezeichnet durch Symbole 6‴ in der Spalte XI, verweisen, an denen das auf ihnen gewachsene Material gelandet ist.

In einem anschließenden Schritt XII wird das Material geborgen, z.B. von einer Ballenpresse 9 eingesammelt und zu Ballen gepresst. Die zum Bergen des Materials verwendete Maschine hat eine Mehrzahl von über ihre Arbeitsbreite verteilten Sensoren oder wenigstens einen an verschiedenen Stellen der Arbeitsbreite positionierbaren Sensor 10 zum Untersuchen von interessierenden Eigenschaften des geborgenen Materials. Als ein solcher Sensor kommt z.B. ein NIR-Sensor in Betracht; mit diesem lassen sich diverse Informationen zur chemischen Zusammensetzung des Materials, insbesondere über ihren Gehalt an für seinen Wert als Tierfutter bedeutsamen Stoffen wie Kohlenhydrat, Protein etc. ermitteln. Indem ein solcher Sensor jeweils an dem Ort der Arbeitsbreite der Ballenpresse 9 misst, an der das Material eines bestimmten Flächenelements 5 zu liegen gekommen, ist, kann der von dem Sensor 10 gelieferte Messwert diesem Flächenelement 5 zugeordnet werden.

Diese Zuordnung der Messergebnisse des Sensors 10 zu Flächenelementen 5, von denen das gemessene Material herrührt, erlaubt es, Verbesserungsmaßnahmen, insbesondere Düngen, gezielt an den Flächenelementen, die dies benötigen, und gezielt mit den jeweils benötigten Pflanzennährstoffen durchzuführen. Die Materialkosten dieser Maßnahmen und unerwünschte Auswirkungen auf die Umwelt können so minimiert werden.

### Bezugszeichen

- 1: Traktor
- 2: Mähvorsatz
- 3: landwirtschaftliche Fläche
- 4: Schwad
- 5: Flächenelement
- 6: Symbol
- 7: Sensor
- 8: Schwad
- 9: Ballenpresse
- 10: Sensor

## Patentansprüche

1. Verfahren zum Ernten von Pflanzenmaterial, insbesondere von Tierfutter, von einer landwirtschaftlichen Nutzfläche, mit wenigstens einem Bearbeitungsschritt (II, VI, X), der das Aufnehmen von Pflanzenmaterial an einem ersten Ort der Nutzfläche und Ablegen des Pflanzenmaterials an einem zweiten, anderen Ort der Nutzfläche umfasst, wobei in dem Schritt ein Datensatz der Nutzfläche erstellt wird, der einen zweiten Ort der Nutzfläche mit wenigstens einem ersten Ort (5) verknüpft, an dem am zweiten Ort abgelegtes Pflanzenmaterial aufgenommen wurde.

2. Verfahren nach Anspruch 1, bei dem der Bearbeitungsschritt ein Mähen (II), ein Wenden (VI), ein Schwaden (X) oder eine Abfolge von zwei oder mehr unter Mähen, Wenden und Schwaden ausgewählten Schritten (II, VI, X) ist.

3. Verfahren nach Anspruch 1 oder 2, bei dem der Bearbeitungsschritt das Berechnen des zweiten Orts anhand des ersten Orts, der Art des Bearbeitungsschritts und optional der Fahrtgeschwindigkeit einer den Bearbeitungsschritt durchführenden Maschine und/oder der Geschwindigkeit von in dem Bearbeitungsschritt eingesetzten Werkzeugen der Maschine umfasst.

4. Verfahren nach einem der vorhergehenden Ansprüche, mit einem Schritt (VI, X, XII) des Wiederaufnehmens des am zweiten Ort abgelegten Pflanzenmaterials, des Messens wenigstens eines Parameters des am zweiten Ort aufgenommenen Pflanzenmaterials, und des Aufnehmens des Messwerts in den Datensatz in Zuordnung zum ersten Ort.

5. Verfahren nach Anspruch 4, bei dem der Parameter der Wasser- oder Trockenmasseanteil des Pflanzenmaterials, der Ertrag pro Flächeneinheit, der Gehalt an einem wertbestimmenden Bestandteil des Pflanzenmaterials wie etwa Zucker, Kohlenhydrat, Protein, oder ein Verunreinigungsanteil ist.

6. Verfahren nach Anspruch 4 oder 5, bei dem der Schritt des Wiederaufnehmens das Bergen (XII) des Pflanzenmaterials von der Nutzfläche umfasst.

7. Verfahren nach einem der vorhergehenden Ansprüche, bei dem der Bearbeitungsschritt (II) das Messen des Wasser- oder Trockenmasseanteils des am ersten Ort aufgenommenen Pflanzenmaterials und das Festlegen einer Restverweilzeit des Pflanzenmaterials auf der Nutzfläche anhand des gemessenen Wasser- oder Trockenmasseanteils umfasst.
